(19) Europäisches Patentamt

European Patent Office

Office européen des brevets

(11) **EP 1 536 359 A2**

(12) **EUROPEAN PATENT APPLICATION**

(43) Date of publication:
**01.06.2005 Bulletin 2005/22**

(51) Int Cl.$^7$: **G06F 17/60**

(21) Application number: **04021177.3**

(22) Date of filing: **07.09.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **06.10.2003 IT MI20031920**

(71) Applicant: **Politecnico Di Milano**
**20133 Milano (IT)**

(72) Inventors:
• **Stabilini, Stefano**
**20133 Milano (IT)**

• **Albini, Marco**
**20145 Milano (IT)**
• **Bonfiglioli, Sandra**
**20133 Milano (IT)**
• **Calza, Gian Piero**
**20133 Milano (IT)**
• **Stevan, Cesare**
**20133 Milano (IT)**
• **Zedda, Roberto**
**20133 Milano (IT)**

(74) Representative: **Simino, Massimo et al**
**Perani Mezzanotte & Partners**
**Piazza S. Babila, 5**
**20122 Milano (IT)**

(54) **Equipment for the generation of chronographic maps.**

(57) Equipment (1) for the generation of a chronographic map ($\Sigma$) for an area having a plurality of activities comprising a display screen (2) to display the map ($\Sigma$), memory means (3) to place a pair of Cartesian coordinates and a plurality of time-based data in memory, selection means (4) to select a display period ($T_{start}$, $T_{end}$) and an updating interval ($T_{update}$) for the dynamic map ($\Sigma$) so as to define a plurality of display times ($T_j$). Equipment (1) also comprises a graphic interface (5) to display a corresponding graphic element (SI) on display screen (2) for every display time ($T_j$) for every activity, and processing means (6) to process at least one time-dependent datum with the display time ($T_j$) to switch the graphic element (SI) between at least two different forms of display.

FIG.10

**Description**

This invention relates to equipment for the generation of chronographic maps in accordance with the precharacterising clause of claim 1.

In particular this invention relates to equipment for the generation of chronographic maps which is applicable in the field of the management, organisation and planning of public policies, specific time-based urban policies.

Systems for the generation of cartographic maps in which a plurality of information relating to a specific geographical area of interest is represented are known. These systems, known as geographical information systems (GIS), are capable of relating information of a cartographic type for a particular geographical area with information relating to phenomena present within the area. In this way it is possible to generate chronographic maps which in addition to the usual cartographic information make it possible to have available additional information relating to the area in question. For example, from an analysis of a map generated in this way it is possible to obtain information relating to the population density per $km^2$ for the specific area of interest, or the number of persons living in that area. The map is generated by positioning graphic elements distributed in various ways according to the information data represented, for example the value for the population density, the number of persons living in the area, and the like, on the chronographic base map. Through the use of an appropriate key the user can evaluate the information not as it stands, but in relation to the specific area of interest.

For this reason these maps are widely used as a tool for organising and planning land policy for urban development, for example, but not only, by local authorities.

However, chronographic mapping of the type described above does not allow acess to information relating to events which take place over time, for example the flow of persons in a particular area, the flow of passengers on public transport, the opening up and closing down of commercial businesses, the start and end of cultural events, displays and so on.

Whenever it is necessary to have the abovementioned information, existing chronographic maps are only capable of instantaneously "photographing" the situation, but not of showing the change in the phenomenon over time.

As a consequence there has been felt an appreciable need to have chronographic maps which make it possible to represent phenomena or events relating to a specific geographical area dynamically in time and space.

The object of this invention is to provide equipment for the generation of chronographic maps having structural and functional characteristics such as to satisfy the abovementioned requirements and at the same time to overcome the disadvantages mentioned with reference to the known art.

This object is achieved by equipment for the generation of chronographic maps according to claim 1.

Further features and advantages of the equipment for the generation of dynamic chronographic maps according to this invention will be apparent from the description of a preferred embodiment thereof described below, provided purely indicatively and without restriction, with reference to the appended figures, in which:

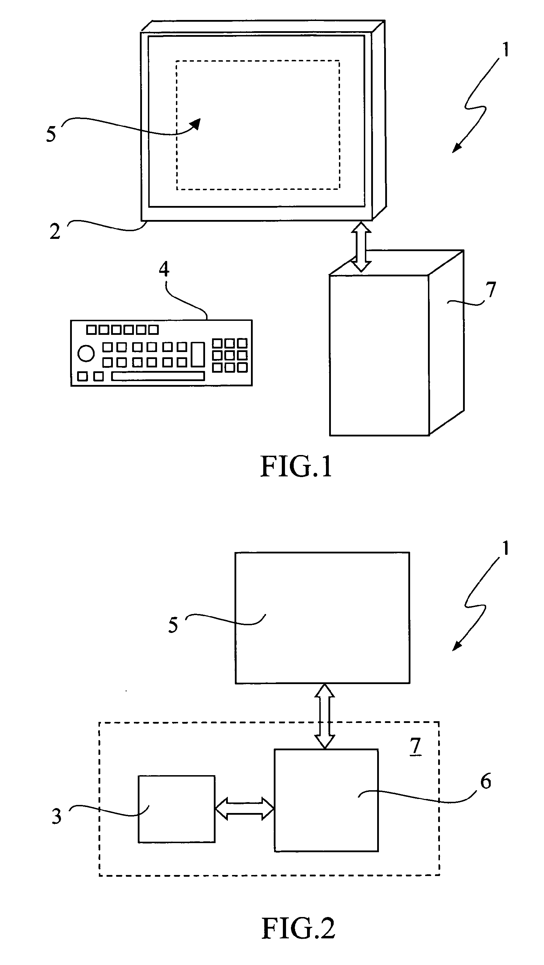

- Figure 1 shows a diagram of equipment for the generation of dynamic chronographic maps according to this invention,
- Figure 2 shows a detail of the diagram of the equipment in Figure 1,
- Figures 3 and 4 illustrate structures for storing data in memory,
- Figures 5 to 9 show an embodiment of the graphic interface of the equipment in Figure 1, and
- Figure 10 shows chronographic maps displayed by the graphic interface at different times during display.

With reference to the appended figures, 1 generically indicates equipment for the generation of a chronographic map Σ according to this invention.

The term chronographic map used in this invention refers to any topographical representation on which an area of territory or an area of interest is graphically represented in a detailed way using conventional signs, or in which a map of urban times are represented graphically.

The remainder of the description will be made with non-restrictive reference to equipment for the generation of a chronographic map Σ for an urban area, notwithstanding the possibility of generating chronographic maps for a non-urban area, such as for example airports, seaports or river ports, industrial areas, fairgrounds, playing fields and the like.

The urban area comprises a plurality of activities within which it is possible to distinguish N on-off activities $SA_i$, where $i = 1 ... N$, and M dynamic activities $DA_k$, where $k = 1 ... M$.

The term on-off activity used in this invention relates to phenomena which can be in two different states in the course of time, such as commercial businesses or activities, cultural events, public offices and the like. For example a commercial business may be open (state = ON) or closed (state = OFF) within the period of time of a day depending upon the instant of time considered.

The term dynamic activity used in this invention relates to phenomena which can be represented by a plurality of values which vary over time. In other words each value varying over time corresponds to a flow of an item, such as for example a flow of persons entering/leaving an underground station, a flow of public transport corresponding to a particular station, a flow of persons entering/leaving a shopping centre and so on measured at a predetermined instant in time corresponding to a spatial position identified within the area.

Equipment 1 comprises a display screen 2 capable of displaying chronographic map $\Sigma$, memory means 3 capable of memorising a pair of Cartesian coordinates and a plurality of time-based data for each activity. In accordance with a preferred embodiment, memory means 3 comprise a mass memory, such as for example a hard disk, a memory of the RAM type, etc.

Each pair of Cartesian coordinates can be associated with chronographic map $\Sigma$ and represent the geographical position of the activity. Corresponding pairs of Cartesian coordinates $Sx_i$, $Sy_i$ are defined in the case of on-off activities $SA_i$, while in the case of dynamic activities $DA_k$ corresponding pairs of Cartesian coordinates $Dx_k$, $Dy_k$ are defined.

In accordance with the preferred embodiment the time-based data for each on-off activity $SA_i$ stored in memory means 3 comprise a time for the start of the activity $Ton_i$ and a time for the end of the activity $Toff_i$.

The start time for the activity $Ton_i$ and the end time $Toff_i$ can represent the opening and closing times of a commercial business, or the days on which a fair opens and closes, respectively, and so on. It is important to note that a particular on-off activity can open and close several times in the course of one day. In this case on-off activity $SA_i$ is repeated as many times as there are opening and closing times.

In accordance with the preferred embodiment, for each dynamic activity $DA_k$ a value $F_k(TS_1)$ representing the flow of the item considered is sampled at successive sampling times $TS_1$.

It should be pointed out that although a flow datum is sampled at a well-identified sampling time $TS_1$, its value is not necessarily representative of the dynamic activity $DA_k$ and time $TS_1$, but may correspond to a value of the flow in the entity $F_k(TS_1)$ measured during the time interval $\Delta T$ preceding the sampling time $TS_1$.

According to a preferred embodiment $\Delta T$ is equal to $TS_1$-$TS_{1-1}$. In this way the value of the flow of entity $F_k(TS_1)$ sampled at instant $TS_1$ takes into account the measurement made between the preceding time $TS_{1-1}$ and the present time $TS_1$.

A datum for the flow of an entity $F_k(TS_1)$ may for example represent the number of persons entering/leaving an underground station sampled at time $TS_1$ and measured over a period of time $\Delta T$ preceding that time $TS_1$, or the number of means of public transport which pass a particular station sampled at time $TS_1$ and measured over a period of time $\Delta T$ preceding that time $TS_1$.

Equipment 1 also comprises selection means 4 which are capable of selecting a display interval, $T_{start}$,..., $T_{end}$ and a chronographic map update time $T_{update}$ to define a plurality of a display instants $T_j$ where

$$T_j = T_{start} + \sum_{j=1}^{P}(j-1)T_{update}$$

where $T_1 = T_{start}$ and $Tp = T_{end}$.

In this way it is possible to set the display time window for the map generated and the map updating period, that is the frequency with which the map is updated.

Equipment 1 also comprises a graphic interface 5 which is capable of displaying a graphic element SI corresponding to the respective pair of Cartesian coordinates for the activity, on the display screen, for each activity at every display time $T_j$ for the map.

The management of graphic interface 5 is aided by the use of selection means 4. According to a preferred embodiment selection means 4 take the form of a keyboard and a mouse.

It should be noted that graphic interface 5 can display only on-off activities $SA_i$ or only dynamic activities $DA_k$ alternately, or both at the same time. With this object, through selection means 4 it is possible to select those activities from the plurality of activities which are to be displayed on the map.

Graphic interface 5 may also display a cursor of the type known in IT applications to permit a user to check the selections made via selection means 4. The cursor may be an arrow or another graphic symbol suitable for the purpose.

Graphic interface 5 may also display additional information such as for example date, time and other information which will be described in greater detail below.

The equipment finally includes processing means 6 capable of processing at least one datum in the plurality of time data at each display time $T_j$ in order to switch graphic element SI between at least two different forms of display.

It follows that as the display time $T_j$ for the map varies, the manner of display of graphic element SI associated with each activity, or the chronographic map on which graphic elements SI are displayed, varies. As a consequence the map generated by equipment 1 according to the invention may be defined dynamically, where the term dynamic relates to the variability in what the map displays over time, or the display of the graphic elements SI associated with each activity.

In accordance with a preferred embodiment, processing means 6 and memory means 3 are installed in a processor device 7 so as to render equipment 1 more compact and easier to use.

Each on-off activity $SA_1$ may adopt two different states, STATE, depending upon whether it is open or closed at a particular display time $T_j$. The manner in which associated graphic element SI is displayed is switched depending upon the STATE status of the activity.

In order to determine the status of each on-off activity $SA_i$ at each display time $T_j$, processing means 6 carries out a comparison between at least one of the time-based data for on-off activity $SA_i$ and display time $T_j$ in question for each on-off activity $SA_i$ and for each display time $T_j$.

In particular, if display time $T_j$ lies between the activity's start time $Ton_i$ and the end time $Toff_i$ for an on-off activity $SA_i$, then the processing means associate an activity status STATE=ON for this on-off activity $SA_i$, and a first display form of graphic element SI corresponds to this. If instead display time $T_j$ is less than the activity start time $Ton_i$ or greater than the activity end time $Toff_i$, then the processing means associates an activity status STATE=OFF, to which a second different form of display of graphic element SI corresponds, for this on-off activity $SA_i$.

Graphic element SI is for example a coloured circle, whose first and second forms of display differ by the colour assigned to the circle.

Unlike what has been stated above relating to activities of the on-off type, dynamic activities $DA_k$ are not defined by an activity status. As previously stated, for each dynamic activity $DA_k$ memory means 3 place flow data for entity $F_k(TS_1)$ sampled at successive sampling times $TS_1$ in memory. The manner in which graphic element SI associated with it is displayed is switched depending upon the value of the flow datum $F_k(TS_1)$ for dynamic activity $DA_k$.

With this object processing means 6 compare the sampling times $TS_1$ and the display time $T_j$ for each display time $T_j$ and each dynamic activity $DA_k$ in order to identify the flow datum for entity $F_k(TS_1)$ corresponding to display time $T_j$ in order to switch graphic element SI between a plurality of display forms depending upon the value of flow datum $F_k(TS_1)$ or dynamic activity $DA_k$.

Preferably, a different form of display for graphic element SI is associated with a value range of flow data $F_k(TS_1)$. In this way a predetermined number of different forms of display of graphic element SI are associated with a corresponding number of different ranges for the flow data values $F_k(TS_1)$.

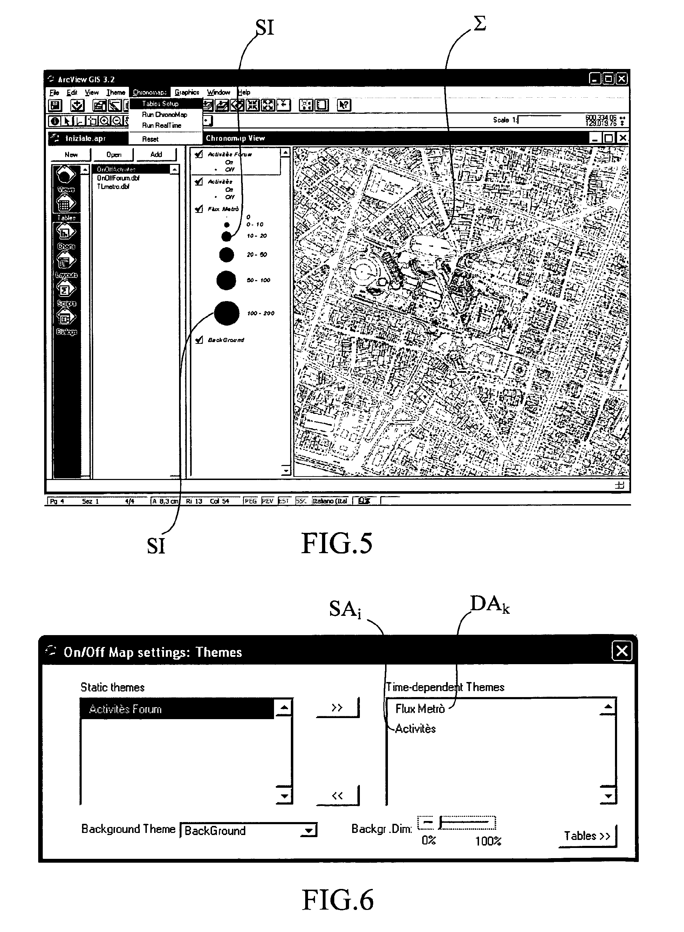

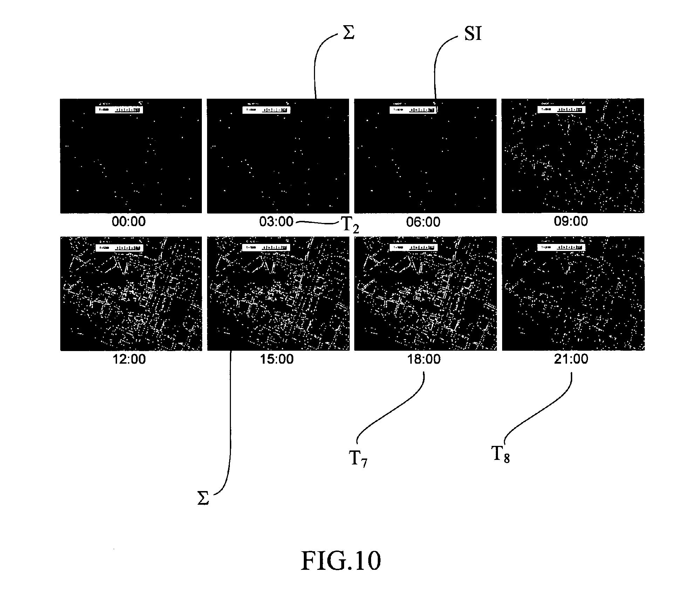

Preferably the plurality of display forms of graphic element SI differ from each other in size. In the example described here and as illustrated in Figures 5 and 10, the map displays six different ranges of flow data to which six different forms of display of graphic element SI, in the example a circle, correspond, which differ in the diameter of the circle.

The function of equipment 1 according to the invention will be described below on the basis of an initial situation in which pairs of Cartesian coordinates and a plurality of time data relating to activities are stored in memory 3.

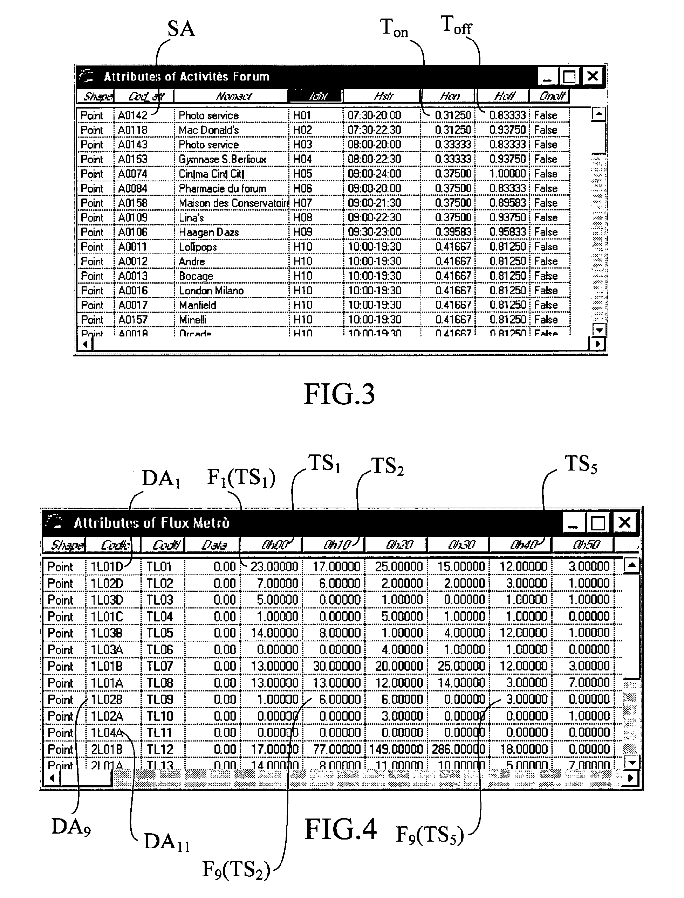

According to a preferred embodiment, the time-based data for the activities are stored in memory in the form of tables (Figures 3 and 4). In the example illustrated in the figure the time-based data $Ton_i$, $Toff_i$ for on-off activities $SA_i$ are stored in a table which is structured differently from that used for dynamic activities $DA_k$. This difference is due to the different natures of the activities, one of which can be identified through two different states, the other through the plurality of values for data flows.

Time-based data for activities are partly provided by conventional sources (local authorities, category associations, etc.) and are partly obtained by specialised personnel located in the areas in which the activities in question take place.

Alternatively it is possible to provide for the use of remote data acquisition systems through which the various activities can be monitored and corresponding data can be stored in the memory of equipment 1.

Once all the data relating to the activities considered have been stored in the memory of memory means 3, equipment 1 is read to accept commands from the user through selection means 4.

In a manner which is in itself known, the hardware interface, which is not shown in the figures, places selection means 4 in communication with graphic interface 5 in such a way as to enable the user to control his selections on display screen 2.

The remainder of the description makes reference in a non-restrictive way to a preferred embodiment of graphic interface 5.

In order to generate a dynamic chronographic map a user using equipment 1 according to the invention must necessarily carry out a minimum series of operations. Performance of these operations is enabled through graphic interface 5 which displays the selections made by the user on screen 2.

The initial screen for graphic interface 5 displays a series of icons from which it is possible to open and close a plurality of display windows (Figure 5).

First of all the activities which are to be used to generate the dynamic map are selected from those available in memory 3. It should be pointed out that some activities can be selected in static mode so as to define a static theme for the map. In other words, graphic elements SI associated with these activities do not vary in their manner of display over time.

In what follows it is assumed that initially all the activities are included in static themes and that subsequently the user selects those which are to be used for the dynamic map. Alternatively all the activities may have already been selected for dynamic display.

In order to make the abovementioned selection the user opens the window "Map Setting: Themes" which displays two boxes: the "Static Themes" box is designed to include the list of static themes, while the "Time-dependent Themes" box is designed to display the activities selected from the "Static Themes" box for which the cartographic representation is to vary over time (Figure 6), that is the activities for which dynamic representation is desired.

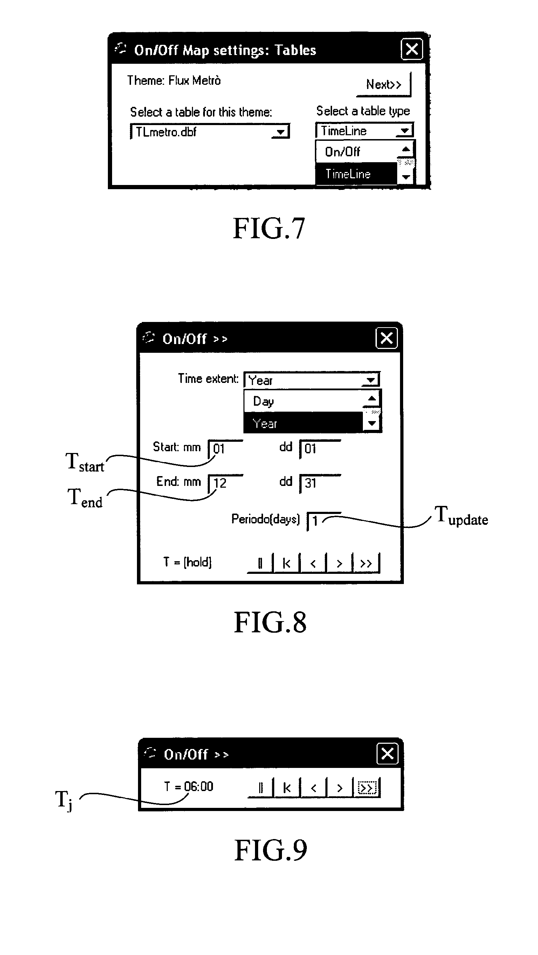

Subsequently the user opens the "Map Settings: Tables" window to select the relative memory position for each selected activity in which the corresponding time data are present (Figure 7).

In the example the name of a file containing the time-based data and the time data necessary for generation of the dynamic map, stored in the form of a table (Figures 3 and 4), are selected. For each table it is necessary to select the type of structure in which the data for the activities are stored in memory. As has been seen previously, it is preferable to use different structures for on-off activities $SA_i$ and dynamic activities $DA_k$.

After the tables from which the time-based data for the activities are to be taken have been selected, it is necessary to set the display window $T_{start}$, Tend and the map updating period $T_{update}$.

With this object the user opens the "On/Off" dialogue window and through selection means 4 first selects the length of time "Time extent" for display of the dynamic map, for example a year, month, day (Figure 8). Subsequently the user selects the start time $T_{start}$ from the "Start" box and the end time Tend from the "End" box. If the period of time selected is one year, the start and end days and months are selected, if the period is one day, the start and end times are selected. Finally the user selects the updating interval or period $T_{update}$ for the map which is to be generated.

In this way the user will have selected all the parameters necessary for equipment 1 to be able to generate the dynamic map. At this point the "On/Off" window displays a series of buttons through which the user can control the changes in the dynamic map over time (Figure 9) .

Figure 10 shows the change over time of an example of a chronographic map generated by equipment 1 and displayed at successive display times $T_j$. As will be noted the graphic elements SI for on-off activities $SA_i$ switch between the two on-off forms of display while graphic elements SI for dynamic activities $DA_k$ switch between the six different forms of display having different diameters according to the flow datum $F_k(TS_1)$ relating to the display time $T_j$ considered.

The animation ends when display time $T_j$ coincides with the end time $T_{end}$.

As will be appreciated from what has been described, the equipment for the generation of a dynamic map according to this invention makes it possible to satisfy the abovementioned requirements and at the same time to overcome the disadvantages mentioned in the introductory part of this description in reference to the known art.

Obviously in order to satisfy contingent and specific requirements a person skilled in the art could apply many modifications and variants to the equipment according to the invention described above, all of which however are included within the scope of protection of the invention as defined by the following claims.

**Claims**

1. Equipment (1) for the generation of a chronographic map ($\Sigma$) of an area comprising a plurality of activities, the said equipment comprising:

   - a display screen (2) capable of displaying the said map,
   - memory means (3) capable of placing a pair of Cartesian coordinates and a plurality of time-based data for each activity in memory,
   - selection means (4) capable of selecting a display period ($T_{start}$, $T_{end}$) and an updating interval ($T_{update}$) for the dynamic map ($\Sigma$) so as to define a plurality (P) of display times ($T_j$),

   **characterised in that** it comprises

   a graphic interface (5) designed to display a graphic element (SI) corresponding to a pair of Cartesian coordinates for the activity on the said display screen (2) at each display time ($T_j$) for each activity, and
   processing means (6) designed to process at least one time-based datum of the said plurality of time-based data with the said display time ($T_j$) to switch the said graphic element ($S_i$) between at least two different forms of display.

2. Equipment (1) for the generation of a chronographic map ($\Sigma$) according to claim 1, in which the said plurality of activities comprise on-off activities ($SA_i$), the said plurality of time-based data comprising an activity start time ($Ton_i$) and an activity end time ($Toff_i$) for each on-off activity ($SA_i$), the said processing means (6) associating with each on-off activity ($SA_i$):

   - a first activity status (STATE=ON) if the display time ($T_j$) lies between the start time ($Ton_i$) and the end time ($Toff_i$) for the activity,
   - a second activity status (STATE=OFF) if the display time ($T_j$) is less than the activity start time ($Ton_i$) or greater than the activity end time ($Toffi$) ,
   - the said first and second different forms of display of the graphic element (SI) corresponding to the said first and second activity statuses respectively.

3. Equipment (1) for the generation of a chronographic map ($\Sigma$) according to claim 1 or 2, in which the said plurality of activities comprises dynamic activities ($DA_k$), the said plurality of time-based data comprising flow data for the entity ($F_k(TS_1)$) for each dynamic activity ($DA_k$) sampled at corresponding sampling times ($TS_1$), the said processing means 6 comparing the sampling times ($TS_1$) and the display time

$(T_j)$ to identify the flow datum for the entity $(F_k(TS_1))$ corresponding to the display time $(T_j)$ for each display time (Tj) and for each dynamic activity $(DA_k)$ so as to switch the said graphic element (SI) between a plurality of display forms depending upon the value of the flow datum for the dynamic activity.

FIG.1

FIG.2

SA     $T_{on}$   $T_{off}$

**Attributes of Activitès Forum**

| Shape | Cod_att | Nomact | Idht | Hstr | Hon | Hoff | Onoff |
|---|---|---|---|---|---|---|---|
| Point | A0142 | Photo service | H01 | 07:30-20:00 | 0.31250 | 0.83333 | False |
| Point | A0118 | Mac Donald's | H02 | 07:30-22:30 | 0.31250 | 0.93750 | False |
| Point | A0143 | Photo service | H03 | 08:00-20:00 | 0.33333 | 0.83333 | False |
| Point | A0153 | Gymnase S.Berlioux | H04 | 08:00-22:30 | 0.33333 | 0.93750 | False |
| Point | A0074 | Cinema Cini Citi | H05 | 09:00-24:00 | 0.37500 | 1.00000 | False |
| Point | A0084 | Pharmacie du forum | H06 | 09:00-20:00 | 0.37500 | 0.83333 | False |
| Point | A0158 | Maison des Conservatoire | H07 | 09:00-21:30 | 0.37500 | 0.89583 | False |
| Point | A0109 | Lina's | H08 | 09:00-22:30 | 0.37500 | 0.93750 | False |
| Point | A0106 | Haagen Dazs | H09 | 09:30-23:00 | 0.39583 | 0.95833 | False |
| Point | A0011 | Lollipops | H10 | 10:00-19:30 | 0.41667 | 0.81250 | False |
| Point | A0012 | Andre | H10 | 10:00-19:30 | 0.41667 | 0.81250 | False |
| Point | A0013 | Bocage | H10 | 10:00-19:30 | 0.41667 | 0.81250 | False |
| Point | A0016 | London Milano | H10 | 10:00-19:30 | 0.41667 | 0.81250 | False |
| Point | A0017 | Manfield | H10 | 10:00-19:30 | 0.41667 | 0.81250 | False |
| Point | A0157 | Minelli | H10 | 10:00-19:30 | 0.41667 | 0.81250 | False |
| Point | A0018 | Orcade | H10 | 10:00-19:30 | 0.41667 | 0.81250 | False |

## FIG.3

$DA_1$   $F_1(TS_1)$   $TS_1$   $TS_2$       $TS_5$

**Attributes of Flux Metrò**

| Shape | Codic | Codif | Data | 0h00 | 0h10 | 0h20 | 0h30 | 0h40 | 0h50 |
|---|---|---|---|---|---|---|---|---|---|
| Point | 1L01D | TL01 | 0.00 | 23.00000 | 17.00000 | 25.00000 | 15.00000 | 12.00000 | 3.00000 |
| Point | 1L02D | TL02 | 0.00 | 7.00000 | 6.00000 | 2.00000 | 2.00000 | 3.00000 | 1.00000 |
| Point | 1L03D | TL03 | 0.00 | 5.00000 | 0.00000 | 1.00000 | 0.00000 | 1.00000 | 1.00000 |
| Point | 1L01C | TL04 | 0.00 | 1.00000 | 0.00000 | 5.00000 | 1.00000 | 1.00000 | 0.00000 |
| Point | 1L03B | TL05 | 0.00 | 14.00000 | 8.00000 | 1.00000 | 4.00000 | 12.00000 | 1.00000 |
| Point | 1L03A | TL06 | 0.00 | 0.00000 | 0.00000 | 4.00000 | 1.00000 | 1.00000 | 0.00000 |
| Point | 1L01B | TL07 | 0.00 | 13.00000 | 30.00000 | 20.00000 | 25.00000 | 12.00000 | 3.00000 |
| Point | 1L01A | TL08 | 0.00 | 13.00000 | 13.00000 | 12.00000 | 14.00000 | 3.00000 | 7.00000 |
| Point | 1L02B | TL09 | 0.00 | 1.00000 | 6.00000 | 6.00000 | 0.00000 | 3.00000 | 0.00000 |
| Point | 1L02A | TL10 | 0.00 | 0.00000 | 0.00000 | 3.00000 | 0.00000 | 0.00000 | 1.00000 |
| Point | 1L04A | TL11 | 0.00 | 0.00000 | 0.00000 | 0.00000 | 0.00000 | 0.00000 | 0.00000 |
| Point | 2L01B | TL12 | 0.00 | 17.00000 | 77.00000 | 149.00000 | 286.00000 | 18.00000 | 0.00000 |
| Point | 2L01A | TL13 | 0.00 | 14.00000 | 8.00000 | 11.00000 | 10.00000 | 5.00000 | 7.00000 |

$DA_9$    $DA_{11}$    ## FIG.4   $F_9(TS_5)$

$F_9(TS_2)$

SI          Σ

FIG.5

SA$_i$          DA$_k$

FIG.6

**On/Off Map settings: Tables**

Theme: Flux Metrò

Next>>

Select a table for this theme:

TLmetro.dbf

Select a table type

TimeLine

On/Off

TimeLine

## FIG.7

**On/Off >>**

Time extent: Year

Day

Year

Start: mm 01    dd 01

$T_{start}$

End: mm 12    dd 31

$T_{end}$

Periodo(days) 1

$T_{update}$

T = [hold]    ‖ | k | < | > | >>

## FIG.8

**On/Off >>**

$T_j$

T = 06:00    ‖ | k | < | > | >>

## FIG.9

FIG.10